# EUROPEAN PATENT APPLICATION

(11) **EP 3 235 848 A1**
(43) Date of publication of application: **25.10.2017**
(21) Application number: 16165818.2
(22) Date of filing: 18.04.2016
(51) Int. Cl.: C08G 63/181, C08G 63/60

(54) **FURAN DICARBOXYLATE COPOLYESTERS**

(71) Applicant: Stichting Wageningen Research, 6708 PB Wageningen (NL)
(72) Inventor: van Es, Daniël Stephan, 6721 RP Bennekom (NL); Thiyagarajan, Shanmugam, 6706 HD Wageningen (NL); Vogelzang, Willem, 3441 AT Woerden (NL); Knoop, Johannes Rutger Idsard, 3962 DE Wijk bij Duurstede (NL); van Haveren, Jacobus, 6717 XB Ede (NL)
(74) Representative: V.O.

(57) **Abstract**

Disclosed are copolyesters based on a furan dicarboxylic component (in the form of a carboxylic acid or an ester forming derivative thereof) and a lower alkyl diol component. The furan dicarboxylic component is a mixture of a 2,5-furan dicarboxylic component and a 2,4-furan dicarboxylic component. The mixture is such as to have a molar ratio of the 2,5-furan dicarboxylic residue to the 2,4-furan dicarboxylic residue in a range of from 95:5 to 65:35, preferably from, 90:10 to 80:20. Interestingly, the copolyesters of the invention can also be prepared from a mixture of furan dicarboxylic components as obtained from subjecting furoic acid salts to a disproportionaton reaction. This is of advantage, since these furoic acid salts can be obtained from biomass comprising furfural compounds. The lower alkyl diol is selected from the group consisting of short-chain alkane diols, 2,2,4,4-tetramethyl-1,3-cyclobutanediol, isosorbide, isomannide, isoidide, and mixtures thereof, wherein the short-chain alkane diols satisfy the formula: HO-CHR¹-(CR³R⁴)ₙ-CHR²-OH (formula I), wherein n is 0, 1, or 2, and R¹, R², R³ and R⁴ each independently are H or CH₃. Copolyesters of the invention have suitable properties as substitutes for PET.

## Description

### Field of the Invention

The invention is in the field of polyesters based on furan dicarboxylic acids (FDCA). Particularly, the invention is in the field of converting biobased FDCA monomers into useful polyesters.

### Background to the invention

Furan-2,5-dicarboxylic acid (2,5-FDCA) is widely advocated as a bio-based alternative for terephthalic acid in making polyesters. A background reference on such polyesters is Thiyagarajan et al., Green Chem. (2014).

Part of the importance of 2,5-FDCA as a bio-based monomer, resides in the fact that it can be produced from non-food lignocellulosic feedstocks like wood or grasses, from residues of agro-food production, as well as from non-terrestrial biomass sources. Of particular interest are non-edible C5 sugar streams from agro-residues (like sugar cane bagasse or sugar beet pulp).

Producing 2,5-FDCA from biobased residues, in several cases goes with the production of the isomer 2,4-FDCA. This particularly holds for production from sources of arabinoses and xyloses, such as hemicelluloses and/or xylanes as found in, e.g., bagasse (the residue of sugar cane extraction). For methods to prepare FDCA from renewable sources, reference is made to, *inter alia,* WO2014/182171 and WO 2013/049711.

In the paper by Thiyagarajan et al., homopolyesters are made using various diols (ethylene glycol, 1,3-propane diol, 1,4-butane diol) as diol monomers, and an FDCA isomer (2,5-FDCA, 2,4-FDCA, or 3,4-FDCA) as a dicarboxylic monomer. Reference is also made to WO 2013/096998. Therein mixtures of 2,4-FDCA and 2,5-FDCA are obtained from cheap biomass (products derived from furfural). This is done in a two-step process comprising oxidizing furfural compounds so as to obtain furoic acid, and subjecting furoic acid to a disproportionation reaction so as to obtain said mixture of 2,4-FDCA and 2,5-FDCA.

In order to make more optimal use of the carbon content made available by the processing of biomaterials, it would be desired to use mixtures of 2,5-FDCA and 2,4-FDCA in making polyesters, thus producing copolyesters based on two isomeric FDCA monomers. However, this presents the problem that substitution of 2,4-FDCA for 2,5-FDCA results in a lowering of the glass transition temperature (Tg). E.g., in the event of the polyesters disclosed by Thiyagarajan et al, the 2,4-FDCA polyesters invariably have lower Tg's than their corresponding 2,5-FDCA analogs. For many end-use applications, a lower Tg is not desirable. In fact, any additional temperature degree is a generally desirable attribute for a polyester.

It would thus be desired to provide copolyesters on the basis of both 2,5-FDCA and 2,4-FDCA, yet without a lowering of the Tg as compared to the corresponding 2,5-FDCA homopolyester.

### Summary of the invention

In order to better address the foregoing desire, the invention provides, in one aspect, a copolyester comprising repeating units of an ester of a dihydroxy monomer and a dicarboxylic monomer, wherein the dihydroxy monomer is selected from the group consisting of short-chain alkane diols, 2,2,4,4-tetramethyl-1,3-cyclobutanediol, isosorbide, isomannide, isoidide, and mixtures thereof, wherein the short-chain alkane diols satisfy formula (I):

HO-CHR¹(CR³R⁴)ₙ-CHR²-OH (I)

wherein n is 0, 1, or 2, and R¹, R², R³ and R⁴ each independently are H or CH₃, and the dicarboxylic monomer is a mixture of a 2,5-furan dicarboxylic monomer, selected from the group consisting of 2,5-furan dicarboxylic acid, a carboxylic derivative of 2,5-furan dicarboxylic acid, and combinations thereof, and a 2,4-furan dicarboxylic monomer, selected from the group consisting of 2,4-furan dicarboxylic acid, a carboxylic derivative of 2,4-furan dicarboxylic acid, and combinations thereof, wherein the mixture is such as to have a molar ratio of the 2,5-furan dicarboxylic monomer to the 2,4-furan dicarboxylic monomer in a range of from 95:5 to 65:35.

In another aspect, the invention presents a process for the production of a copolyester comprising subjecting dihydroxy monomers and dicarboxylic monomers to polycondensation conditions, wherein the dihydroxy monomers are selected from the group consisting of short-chain alkane diols of the above formula (I), 2,2,4,4-tetramethyl-1,3-cyclobutanediol, isosorbide, isomannide, isoidide, and mixtures thereof, and the dicarboxylic monomers comprise a mixture of a 2,5-furan dicarboxylic monomer, selected from the group consisting of 2,5-furan dicarboxylic acid, a carboxylic derivative of 2,5-furan dicarboxylic acid, and combinations thereof, and a 2,4-furan dicarboxylic monomer, selected from the group consisting of 2,4-furan dicarboxylic acid, a carboxylic derivative of 2,4-furan dicarboxylic acid, and combinations thereof, wherein the mixture is such as to have a molar ratio of the 2,5-furan dicarboxylic monomer to the 2,4-furan dicarboxylic monomer in a range of from 95:5 to 65:35.

In a still further aspect, the invention concerns a process for producing a polyester from a biobased starting material, comprising the steps of
a. providing biomass comprising furfural compounds;
b. subjecting the furfural compounds to oxidation so as to obtain an oxidation mixture comprising furoic acid salts;
c. subjecting the oxidation mixture to disproportionation conditions so as to obtain a mixture of 2,4-FDCA and 2,5-FDCA;
d. contacting, under polycondensation conditions, the mixture of 2,4-FDCA and 2,5-FDCA with a dihydroxy compound selected from the group consisting of short-chain alkane diols of the above formula (I), 2,2,4,4-tetramethyl-1,3-cyclobutanediol, isosorbide, isomannide, isoidide, and mixtures thereof, so as to obtain a copolyester.

### Brief description of the drawings

Fig. 1 is a graph representing Tg values and molecular weights for various polyesters within the invention and outside of the invention, based on ethane diol;
Fig. 2 is a graph representing Tg values and molecular weights for various polyesters within the invention and outside of the invention, based on 1,3-propane diol;

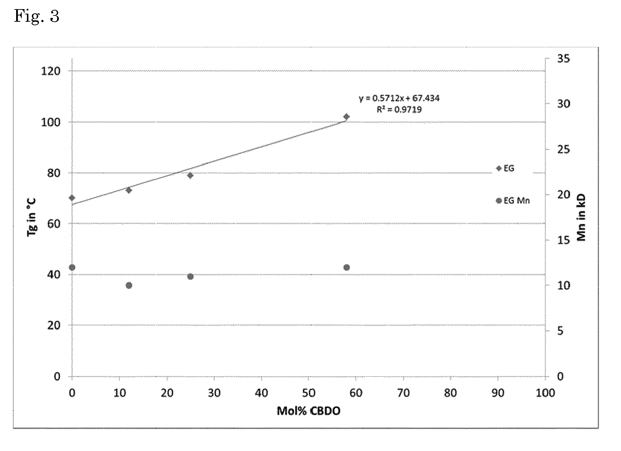

Fig. 3 is a graph representing Tg values and molecular weights of various polyesters based on 2,5-FDCA having different ratios of ethylene glycol and 2,2,4,4-tetramethyl-1,3-cyclobutanediol (CBDO).

### Detailed description of the invention

Polyesters comprise repeating units consisting of an ester. The repeating ester units consist of dicarboxylic residues and diol residues. The dicarboxylic residues consist of the part of a dicarboxylic acid, or an ester-forming carboxylic derivative thereof, remaining as a result of ester formation. The diol residues consist of the part of a diol (i.e., a dihydroxy compound, or an ester forming derivative thereof), remaining as a result of ester formation. In a homopolyester, all dicarboxylic residues are the same and all diol residues are the same. In a copolyester, either or both of the dicarboxylic residues and the diol residues consist of at least two different residues.

The invention relates to copolyesters comprising two different dicarboxylic residues, viz. the residues of 2,5-furan dicarboxylic acid (2,5-FDCA) and 2,4-furan dicarboxylic acid (2,4-FDCA). Thereby these residues may also originate from an ester-forming carboxylic derivative of either or both of said dicarboxylic acids.

The diol residues in the copolyesters of the invention are relatively small dihydroxy compounds. The corresponding diol (dihydroxyl) monomers are selected from the group consisting of short-chain alkane diols of formula (I), 2,2,4,4-tetramethyl-1,3-cyclobutanediol, isosorbide, isomannide, isoidide, and mixtures thereof. In the short-chain alkane diols the two hydroxyl groups are separated from each other by an aliphatic chain of from 2 to 4 carbon atoms. This is reflected in formula (I):

HO-CHR¹-(CR³R⁴)ₙ-CHR²-OH (I)

wherein n is 0, 1, or 2, and R¹, R², R³ and R⁴ each independently are H or CH₃. Accordingly, suitable diols include, among others, ethylene glycol (i.e., ethane-1,2-diol), propylene glycol (i.e., propane-1,2-diol), 1.3-propane diol (i.e., propane-13,-diol), dimethylene glycol (i.e., butane-2,3-diol), 1,4-butane diol (butane-1,4-diol), 1,3-dihydroxy-2-methyl propane diol, and 2,5-hexanediol. Suitable diols further include isosorbide, isomannide, isoidide, and 2,2,4,4-tetramethyl-1,3-cyclobutanediol.

It will be recognized that the two hydroxyl groups in the diols suitable for use in the invention are either on adjacent carbon atoms, or have at most two carbon atoms in between. I.e., the diols for use in the invention comprise dihydroxy alkyl moieties that are 1,2-diols, 1,3-diols or 1,4-diols. The 1,4-diols are 1,4-butanediol, 1,4-pentanediol, 2,5-hexanediol, and the isohexides (isosorbide, isomannide, isoidide). The 1,3-diols are 1,3-propanediol, 2,2-dimethyl-1,3-propanediol (neopentylglycol, or NPG), 2-methyl-1,3-propanediol, 2,2,4,4-tetramethyl-1,3-cyclobutanediol (CBDO). Preferred are the 1,2-diols. These are 1,2-ethane diol (ethylene glycol), 1,2-propanediol (propyleneglycol), and 2,3-butanediol. The diols for use in the invention include any enantiomers, diastereomers, and mixtures thereof for the applicable chiral diols, and the cis and trans isomers, or mixtures thereof, of CBDO.

In an interesting embodiment, the diol residues are based on the aforementioned isohexides. These alcohols can be produced from sugar residues, and can thus also be retreived from biomass. Reference is made to, e.g., WO 2013/125950.

In yet another interesting embodiment, the diol residues are based on CBDO, which also can be obtained in a bio-based manner.

Thus, the copolyesters of the invention can be entirely based on biological feedstock. Thus, preferably, in a copolyester of the invention, all monomers are retrieved by appropriate conversion, as known to the skilled person, from biological feedstock.

The diol residues can be based on a single diol. The diol residues in the copolyester of the invention can also consist of residues based on combinations of diols. The varying repeating units of the invention can be present in the polyester chain in a random order, in an order having a fixed frequency, or in the form of copolymer blocks. Preferred in the invention is a random order.

As desired, the copolyesters of the invention may also comprise a minority of dicarboxylic residues and diol residues different from the above. Preferably, any such different dicarboxylic and/or diol residues, if present, comprises less than 25% of the total dicarboxylic and/or diol residues in the polyester, such as less than 10%, preferably less than 5%. If present, the resulting different repeating units can be included in the polyester chain at random, or based on a fixed frequency, or as a copolymer block.

More preferably, the polyester of the invention consists essentially of repeating units based on the dicarboxylic acid residues of 2,4-FDCA and 2,5-FDCA, and diol residues based on either or both of ethylene glycol and 1,3-propane diol. Most preferably, in one embodiment, the polyester of the invention consists of repeating units consisting of an ester of ethylene glycol and 2,4-FDCA (or an ester-forming carboxylic derivative thereof), and repeating units consisting of an ester of ethylene glycol and 2,5-FDCA (or an ester-forming carboxylic derivative thereof). In another embodiment, the polyester of the invention consists of repeating units consisting of an ester of 1,3-propane diol and 2,4-FDCA (or an ester-forming carboxylic derivative thereof), and repeating units consisting of an ester of 1,3-propane diol and 2,5-FDCA (or an ester-forming carboxylic derivative thereof).

The copolyesters of the invention deviate from the teachings in the art on the corresponding homopolyesters. In fact, in a general sense, the invention is based on the unexpected finding that, in a selected range of molar ratio's, and with selected lower alkyl diols, copolyesters obtained from a mixture of 2,5-FDCA and 2,4-FDCA monomers, have Tg's that are higher than would be expected based on the corresponding homopolyesters. Particularly, the invention allows copolyesters to be produced wherein the carboxylic monomers based on 2,5-FDCA and 2,4-FDCA are combined, yet with a higher Tg than homopolyesters based on either of the FDCA monomers as the sole dicarboxylic residues.

Interestingly, copolyesters of the invention deviate from the corresponding copolyesters having mixed terephthalic and isophthalic residues. As the skilled person is well aware, for these polyesters generally a linear correlation is shown between the terephthalic to isophthalic ratio, and the Tg of the resulting polyesters.

The invention employs a furan dicarboxylic component (in the form of a carboxylic acid or an ester forming derivative thereof), that is a mixture of a 2,5-furan dicarboxylic component and a 2,4-furan dicarboxylic component. The mixture is such as to have a molar ratio of the 2,5-furan dicarboxylic residue to the 2,4-furan dicarboxylic residue in a range of from 95:5 to 65:35, such as 95:5 to 70:30, such as 90:10 to 75:25, such as 90:10 to 80:20. In a preferred embodiment of the copolyester according to the invention, the molar ratio of the 2,5-furan dicarboxylic residue to the 2,4-furan dicarboxylic residue is in a range of from 90:10 to 70:30. In a further preferred embodiment, said molar ratio is in a range of from 90:10 to 80:20. In the latter range, the diol residue most preferably corresponds to ethylene glycol. In another embodiment, the molar ratio of the 2,5-furan dicarboxylic residue to the 2,4-furan dicarboxylic residue is preferably in a range of from 90:10 to 85:15. In the latter range, the diol residue most preferably corresponds to 1,3-propane diol.

In a further preference of the copolyesters according to the invention, the dicarboxylic monomer residue is a mixture obtained by subjecting a furoate to disproportionation conditions. This particularly refers to a synthesis as described in RSC Adv., 2013, 3, 15678-15686 ("Concurrent formation of furan-2,5- and furan-2,4-dicarboxylic acid: unexpected aspects of the Henkel reaction", Thiyagarajan, S., *et al.*). Thereby two mixtures were produced, the ratio's of 2,5-FDCA: 2 2,4-FDCA being, respectively, 68:32 and 86:14. Thereby the furoate (furoic acid salt) is preferably obtained from biomass comprising furfural compounds.

In this respect, the invention also pertains to a process for producing a polyester from a biobased starting material. Thereby biomass is provided comprising pentoses. This refers to streams rich in xylan and/or /arabinan, particularly sugar cane bagasse, sugar beet pulp, potato pulp, citrus pectins, alginates, straw. Pentoses can be converted into furfural compounds. The furfural compounds are subjected to oxidation so as to obtain an oxidation mixture comprising furoic acid salts. This can be done by methods available in the art. See, e.g., US2015/119588, Hu, Yu-Lin; Li, De-Jiang; Li, Dong-Sheng RSC Advances, 2015 , vol. 5, # 32 p. 24936-24943, Mannam, Sreedevi; Sekar Tetrahedron Letters, 2008 , vol. 49, # 6 p. 1083 - 1086.

The resulting oxidation mixture is then subjected to disproportionation conditions so as to obtain a mixture of 2,4-FDCA and 2,5-FDCA. These conditions are described, e.g. in S. Thiyagarajan, A. Pukin, J. van Haveren, M. Lutz and D. S. van Es, RSC Adv., 2013, 3, 15678-15686 and R. Andrisano and A. S. Angeloni, Ann. Chim., 1963, 53, 1658-1664. The mixture of 2,4-FDCA and 2,5-FDCA is then contacted with a dihydroxy compound selected from the group consisting of ethane diol, 1,3-propane diol, and combinations thereof under polycondensation conditions, so as to obtain a copolyester.

The polyesters of the invention can be produced by methods that, as such, are well-known to the skilled person. These methods generally involve providing dicarboxylic monomers and dihydroxy monomers, and subjecting these monomers to polycondensation conditions. Suitable polycondensation conditions are known to the skilled person, e.g., from producing polyesters from terephthalic acid (or ester-forming carboxylic derivatives thereof) and ethylene glycol. It will be understood that a wealth of knowledge is available in respect of producing the well-known polyester PET, i.e., poly(ethylene terephthalate).

In making the copolyesters of the invention, the polyesterification reaction (i.e., typically involving polycondensation) can be conducted in the absence or the presence of a catalyst. Using catalysts is customary in the preparation of polyesters. Suitable catalysts are known to the skilled person. Such catalysts are, e.g., selected from the group of metal oxides. In particular, the catalyst is selected from the group of titanium compounds (e.g. titanium tetraalkoxides such as Ti(*i*-OPr)4, Ti(OEt)4, Ti(OMe)4, Ti(i-OBu)4)), organotin compounds (e.g. dibutyltinoxide (DBTO), dibutyltinlaurate (DBTL), stannous oxide, tinoctanoate), aluminum alkoxides (e.g. aluminum isopropoxide), germanium oxide (GeO2), antimony oxide (Sb2O5), sodium carbonate, cesium carbonate, potassium carbonate and guanidine bases such as triazabicyclodecene (TBD), (1,5,7-triazabicyclo[4.4.0]dec-5-ene) or 1,8-diazabicycloundec-7-ene (DBU).

A typically useful procedure is a conventional two-step melt-polymerization method, such as generally also used in the production of PET. Thereby a mixture of the diol and dicarboxylic monomers are subjected to heating, in two stages. Thus, e.g., the mixture is first exposed to a temperature in the range of 150°C - 190°C, e.g., during 10 - 15 hours, and thereafter to a temperature of 210°C - 225°C during 1 - 2 hours. Subsequently, high vacuum may be applied gradually, to obtain high molecular weight polyesters. For example, the reaction mixture is exposed to a temperature of 210 - 225 °C at 0.02 mbar during 2 - 4 hours.

Such polycondensation results in the formation of a polyester chain comprising repeating units based on ester bonds formed between a dihydroxy monomer and a dicarboxylic monomer. Thus, as with any polyester, the polyester of the invention comprises units that are the esterification residues of a diol and units that can be recognized as the esterification residues of a diacid. The diacid residues are not necessarily obtained from esterification of free dicarboxylic acid. As the skilled person will be aware, other dicarboxylic derivatives corresponding to2,5-FDCA and 2,4-FDCA can also be used. Such carboxylic derivatives are compounds in which two carboxylic groups are recognizable, but with the carboxylic hydroxyl group derivatized, e.g. by esterification, or the formation of a carboxylic acid chloride. The dicarboxylic monomer can be free acids, half free acids (with one carboxylic acid group being a carboxylic derivative such as an ester), or dicarboxylic derivatives. E.g., methyl semi-esters or dimethyl esters are suitable ester-forming carboxylic derivatives of the furan dicarboxylic acids used. Hereinafter, the polyester units derived from the dicarboxylic monomer are referred to as 2,4-FDCA and 2,5-FDCA residues, irrespective of their specific carboxylic form prior to polycondensation. Preferably, the dicarboxylic monomers are in a free diacid form.

The number average molecular weight (Mn) of a polyester of the invention is usually 2,000 g/mol or higher. Preferably it is 5,000 g/mol or higher, more preferably it is 10,000 g/mol or higher.

The weight average molecular weight (Mw) of a polyester of the invention is usually 2,000 g/mol or higher. Preferably it is 5,000 g/mol or higher, more preferably it is 10,000 g/mol or higher.

The invention allows producing copolyesters having an increased Tg as compared to corresponding polyesters not according to the invention. Thereby, in deviation from common knowledge, the higher Tg does not necessarily require a higher molecular weight.

A polyester according to the invention can be opaque or transparent in its solid state. Advantageously, the invention allows producing polyesters that are usually almost colorless. This is an advantage for the application of the polyesters of the invention in food packaging, e.g. soft drink bottles. In the event that the polyester as produced is not colorless, for example slightly yellow, the skilled person will know how to conduct simple purification steps in order to obtain such polyester as a colorless solid after purification. Purification is for example performed by dissolving the polyester in a solvent, for example in a chlorinated solvent such as chloroform, followed by precipitation in an alcohol such as methanol, yielding the polyester as colorless powder. Particularly on an industrial scale, an improved color can also be reached by using thermal stabilizers, anti-oxidants and/or optical additives.

The invention allows to produce bio-based polyesters having such properties as to generally being suitable bio-based substitutes for polyesters based on terephthalic acid or isophthalic acid. Suitably, the polyesters of the invention can be designed such as to have one or more improved material properties compared to that of known polyesters. This is, e.g., a higher thermal stability, a higher glass transition temperature, a higher impact resistance, a reduction of brittle fracture behavior, better gas barrier properties (e.g. for gases such as oxygen, nitrogen, carbon dioxide), or a combination of two or more of the foregoing.

In sum, the invention pertains to copolyesters based on a furan dicarboxylic component (in the form of a carboxylic acid or an ester forming derivative thereof) and a lower alkyl diol component. The furan dicarboxylic component is a mixture of a 2,5-furan dicarboxylic component and a 2,4-furan dicarboxylic component. The mixture is such as to have a molar ratio of the 2,5-furan dicarboxylic residue to the 2,4-furan dicarboxylic residue in a range of from 95:5 to 65:35, preferably from, 90:10 to 80:20. Interestingly, the copolyesters of the invention can also be prepared from a mixture of furan dicarboxylic components as obtained from subjecting furoic acid salts to a disproportionaton reaction. This is of advantage, since these furoic acid salts can be obtained from biomass comprising furfural compounds. The lower alkyl diol is selected from the group consisting of short-chain alkane diols of formula (I), 2,2,4,4-tetramethyl-1,3-cyclobutanediol, isosorbide, isomannide, isoidide, and mixtures thereof. Copolyesters of the invention have suitable properties as substitutes for PET.

The invention will hereinafter be further illustrated with reference to the following, non-limiting examples.

### Example 1

### General polycondensation procedure for 2,5-/2,4-FDCA-Me and linear diols based copolyesters

Dimethyl furan-2,5-dicarboxylate was synthesized as described in J. Polym. Sci., Part A: Polym. Chem., 2013, 51, 4191-4199 (Knoop *et al.*). Dimethyl furan-2,4-dicarboxylate was performed as described in Green Chem., 2014, 16, 1957-1966, Biobased furandicarboxylic acids (FDCAs) ("Effects of isomeric substitution on polyester synthesis and properties" Thiyagarajan, S, *et al.*).

In a typical experiment, polycondensations were conducted in 100 mL three-neck round-bottom flasks equipped with a mechanical overhead stirrer, nitrogen inlet and Liebeg-condenser. Dimethyl furandicarboxylate (1.5 g, 8.14 mmol) and diol (the moles and ratios of diols are given in the Tables below) were charged into the reaction flask. The set-up was placed under vacuum and purged with nitrogen gas, and this cycle was repeated for three times.

The polycondensation method involves two stages. During the first stage, the reaction was carried out under nitrogen gas to form oligomers. The reaction mixture was heated in a dry-syn at 125 °C for 15 min with constant stirring. After observing the complete melt of the mixtures, the catalyst Ti(OiPr)₄ (0.10 mmol) in 2.5 mL of o-xylene was added into the flask under the continuous flow of nitrogen. The temperature was now increased to 160 °C and stirred for 12 h, and finally to 215-220 °C for 1.5-2 h to complete the first stage of pre-polymerization reaction. The methanol and o-xylene were collected in the cooling flask.

In the second stage of the polycondensation to obtain high molecular weight polyesters, high vacuum of 0.02 mbar was applied gradually to the polycondensation set-up at 215-220 °C for 3 h. After completion of the reaction, the reaction mixture was cooled down to room temperature under nitrogen atmosphere. The polymer was purified by dissolving in 10 mL of chloroform/TFA mixture (6:1) and precipitated in 100 mL of methanol, filtered and dried in *vacuo* at 40 °C for 12 h to yield a white powder.

### Example 2

Using the general procedure of example 1, the following copolyesters were prepared using ethylene glycol as the diol. The composition of the polyesters is summarized in Table 1. Thereby the mole percentages of either or both of the furan dicarboxylic acids is given, as well as the number average molecular weight, the weight average molecular weight, and the corresponding polydispersity index (Mw/Mn).

The polyesters were subjected to Differential Scanning Calorimetry (DSC). The DSC measurements were conducted on a Perkin Elmer Diamond series DSC. The temperature range used was -60°C up to 230°C at a heating rate and cooling rate of 10°C/min. First and second heating's were conducted. The resulting Tg's (second heating) are summarized in Table 1 as well.

**Table 1**

| Polyester | 2,5-FDCA (%) | 2,4-FDCA (%) | Mn (g/mol) | Mw (g/mol) | PDI | Tg |
|---|---|---|---|---|---|---|
| A | 100 | 0 | 19,100 | 34,200 | 1.8 | 79 |
| B | 95 | 5 | 20,600 | 36,200 | 1.8 | 78 |
| C | 90 | 10 | 21,100 | 40,600 | 1.9 | 86 |
| D | 85 | 15 | 22,000 | 39,900 | 1.8 | 82 |
| E | 75 | 25 | 18,900 | 35,700 | 1.9 | 77 |
| F | 50 | 50 | 30,200 | 57,400 | 1.9 | 77 |
| G | 25 | 75 | 15,200 | 31,800 | 2.0 | 72 |
| H | 0 | 100 | 21,200 | 39,700 | 1.9 | 73 |

As can be seen from Table 1, the Tg of the homopolyester H is lower than that of the homopolyester A. Nevertheless, the Tg of the corresponding copolyesters B, C, and D are higher than the Tg of homopolyester A.

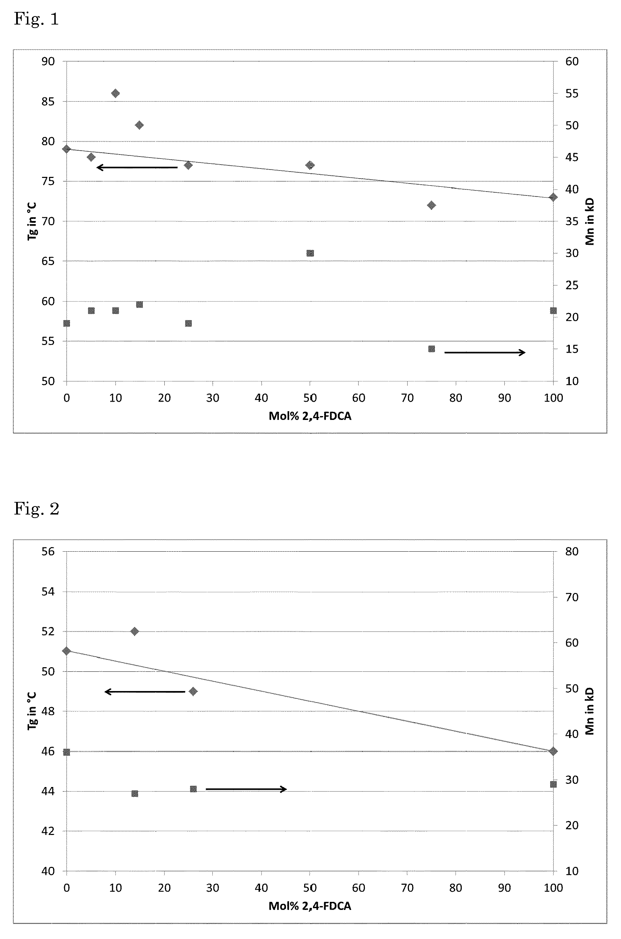

The results are depicted in Fig.1. This figure is a graph in which the X-axis represents the FDCA monomer composition of the copolyesters of Table 1, with reference to the percentage of 2,4-FDCA. It will be understood that the corresponding percentage of 2,5-FDCA adds up to 100%. The Tg measurement points are shown as diamonds, the values of which (Tg in °C) are indicated on a first Y-axis (left-hand side, see arrow). For the same copolymers also the molecular weights are given. These measurement points are indicated as dots, the values of which (MW in kD) are indicated on a second Y-axis (right-hand side, see arrow). In the graph, a solid line is given to indicate a linear correlation of Tg with the ratio of the dicarboxylic monomer, 2,5-FDCA:2,4-FDCA, from 100:0 to 0:100. The Tg's of the copolymers B and C are substantially above this line. It can further be seen from the relatively small variations in molecular weight, that these higher Tg's cannot be attributed to a molecular weight effect.

### Example 3

A synthesis of a dimethyl furan-2,4-dicarboxylate and dimethyl furan-2,5-dicarboxylate mixture was performed as described in RSC Adv., 2013, 3, 15678-15686 ("Concurrent formation of furan-2,5- and furan-2,4-dicarboxylic acid: unexpected aspects of the Henkel reaction", Thiyagarajan, S., *et al.*). Thereby two mixtures were produced, the ratio's of 2,5-FDCA: 2 2,4-FDCA being, respectively, 68:32 and 86:14.

Analogously to Example 2, yet with lower molecular weights, copolyesters were prepared using a mixture of 2,4-FDCA and 2,5-FDCA as obtained from the above-identified Henkel-type disproportionation reaction of potassium-2-furoate.

The composition of these polyesters (I and J) is summarized in Table 2. Thereby also the Tg, measured as in Example 2, is given. For reference, the above-mentioned homopolymer H is included in Table 2.

**Table 2**

| Polyester | 2,5-FDCA (%) | 2,4-FDCA (%) | Mn (g/mol) | Mw (g/mol) | PDI | Tg |
|---|---|---|---|---|---|---|
| H | 0 | 100 | 21,200 | 39,700 | 1.9 | 73 |
| I | 68 | 32 | 14,500 | 28,300 | 1.9 | 76 |
| J | 86 | 14 | 13,600 | 26,600 | 2.0 | 76 |

As shown, the Tg of the copolyesters I and J is higher than that of homopolyester H, despite their substantially lower molecular weights.

### Example 4

Analogously to Example 3, copolyesters were prepared, based on the disproportionation of furoate, using 1,3-propylene glycol as the diol. The 2,4-FDCA composition, the molecular weights, and the Tg's of these polyesters are summarized in Table 3.

**Table 3**

| Polyester | 2,5-FDCA (%) | 2,4-FDCA (%) | Mn (g/mol) | Mw (g/mol) | PDI | Tg |
|---|---|---|---|---|---|---|
| K | 100 | 0 | 36,300* | 64,100* | 1.8 | 51* |
| L | 86 | 14 | 27,100 | 55,600 | 2.1 | 52 |
| M | 74 | 26 | 28,000 | 58,500 | 2.0 | 49 |
| N | 0 | 100 | 29,000 | 51,100 | 1.8 | 46 |

| | | | | | | |
|---|---|---|---|---|---|---|
| * higher molecular weight | | | | | | |

As can be seen from Table 3, copolyester L of the invention has a higher Tg than homopolyester K, despite a lower molecular weight. Copolyester L has a Tg well above that of homopolyester N. These results are also depicted in Fig. 2. This figure is a graph similar to Fig. 1, the legend of which is also applicable to Fig. 2. The Tg's of the copolymers I and J are substantially above the line representing a linear correlation between monomer composition and Tg.

### Example 5

Analogously to Example 1, copolyesters were prepared using 2,2,4,4-tetramethyl-1,3-cyclobutanediol (CBDO) as the diol. The 2,4-FDCA composition, the molecular weights, and the Tg's of these polyesters are summarized in Table 4.

**Table 4**

| Polyester | 2,5-FDCA (%) | 2,4-FDCA (%) | Mn kDa | Tg |
|---|---|---|---|---|
| O | 100 | 0 | 10* | 124°C |
| P | 90 | 10 | 11 | 135°C |
| Q | 75 | 25 | 14 | 138°C |
| R | 50 | 50 | 12 | 125°C |
| Q | 0 | 100 | 10 | 130°C |

| | | | | |
|---|---|---|---|---|
| *) Based on extrapolation, since the 2,5-FDCA homo polyester with CBDO is highly difficult to produce in an acceptable molecular weight. To this end various copolyesters were made using different ratio's of CBDO and ethylene glycol (EG). The corresponding graph is presented as Fig. 3. The extrapolated Tg for the 2,5-FDCA homopolyester with CBDO is 124°C. | | | | |

## Claims

1. A copolyester comprising repeating units of an ester of a dicarboxylic monomer residue and a diol monomer residue, wherein the diol monomer residue corresponds to a monomer selected from the group consisting of short-chain alkane diols, 2,2,4,4-tetramethyl-1,3-cyclobutanediol, isosorbide, isomannide, isoidide, and combinations thereof, wherein the short-chain alkane diols satisfy formula (I):
HO-CHR¹-(CR³R⁴)ₙ-CHR²-OH (I)
with n being 0, 1, or 2, and R¹, R², R³ and R⁴ each independently being H or CH₃, and the dicarboxylic monomer residue is a mixture of a 2,5-furan dicarboxylic residue corresponding to 2,5-furan dicarboxylic acid and a 2,4-furan dicarboxylic residue corresponding to 2,4-furan dicarboxylic acid, wherein the mixture is such as to have a molar ratio of the 2,5-furan dicarboxylic residue to the 2,4-furan dicarboxylic residue in a range of from 95:5 to 65:35.

2. A copolyester according to claim 1, wherein the molar ratio of the 2,5-furan dicarboxylic residue to the 2,4-furan dicarboxylic residue is in a range of from 90:10 to 70:30.

3. A copolyester according to claim 2, wherein said molar ratio is in a range of from 90:10 to 80:20.

4. A copolyester according to claim 2 or 3, wherein the diol residue corresponds to ethylene glycol, propylene glycol, or 2,3-butanediol..

5. A copolyester according to any one of the preceding claims, wherein the molar ratio of the 2,5-furan dicarboxylic residue to the 2,4-furan dicarboxylic residue is in a range of from 90:10 to 85:15.

6. A copolyester according to claim 5, wherein the diol residue corresponds to 1,3-propane diol.

7. A copolyester according to any one of the preceding claims, wherein the dicarboxylic monomer residue is a mixture obtained by subjecting a furoate to disproportionation conditions.

8. A copolyester according to any one of the preceding claims, wherein the diol residue corresponds to a dihydroxy monomer selected from the group consisting of isosorbide, isomannide, isoidide, and 2,2,4,4-tetramethyl-1,3-cyclobutanediol.

9. A copolyester according to claim 8, wherein all monomers are retrieved by appropriate conversion from biological feedstock.

10. A process for the production of a copolyester comprising subjecting dihydroxy monomers and dicarboxylic monomers to polycondensation conditions, wherein the dihydroxy monomers are selected from the group consisting of short-chain alkane diols, 2,2,4,4-tetramethyl-1,3-cyclobutanediol, isosorbide, isomannide, isoidide, and mixtures thereof, wherein the short-chain alkane diols satisfy formula (I):
HO-CHR¹-(CR³R⁴)ₙ-CHR²-OH (I)
wherein n is 0, 1, or 2, and R¹, R², R³ and R⁴ each independently are H or CH₃, and the dicarboxylic monomers comprise a mixture of a 2,5-furan dicarboxylic monomer, selected from the group consisting of 2,5-furan dicarboxylic acid, a carboxylic derivative of 2,5-furan dicarboxylic acid, and combinations thereof, and a 2,4-furan dicarboxylic monomer, selected from the group consisting of 2,4-furan dicarboxylic acid, a carboxylic derivative of 2,4-furan dicarboxylic acid, and combinations thereof, wherein the mixture is such as to have a molar ratio of the 2,5-furan dicarboxylic monomer to the 2,4-furan dicarboxylic monomer in a range of from 90:10 to 65:35.

11. A process according to claim 10, wherein said molar ratio corresponds to the ratio's defined in any one of the claims 2, 3, and 5.

12. A process for producing a polyester from a biobased starting material, comprising the steps of
a. providing biomass comprising furfural compounds;
b. subjecting the furfural compounds to oxidation so as to obtain an oxidation mixture comprising furoic acid salts;
c. subjecting the oxidation mixture to disproportionation conditions so as to obtain a mixture of 2,4-FDCA and 2,5-FDCA;
d. subjecting the mixture of 2,4-FDCA and 2,5-FDCA to polycondensation conditions with a dihydroxy compound selected from the group consisting of short-chain alkane diols, 2,2,4,4-tetramethyl-1,3-cyclobutanediol, isosorbide, isomannide, isoidide, and mixtures thereof, wherein the short-chain alkane diols satisfy formula (I):
HO-CHR¹-(CR³R⁴)ₙ-CHR²-OH (I)
wherein n is 0, 1, or 2, and R¹, R², R³ and R⁴ each independently are H or CH₃, and mixtures thereof, so as to obtain a copolyester.

13. A process according to claim 12, wherein the biomass comprises non-edible pentoses from agro-residues, particularly sugar cane bagasse or sugar beet pulp.
